# EUROPÄISCHE PATENTSCHRIFT

(11) **EP 3 306 166 B1**
(45) Veröffentlichungstag und Bekanntmachung des Hinweises auf die Patenterteilung: **15.07.2020**
(21) Anmeldenummer: 17194357.4
(22) Anmeldetag: 02.10.2017
(51) Int. Cl.: F16L 37/18

(54) **VERBINDUNGSSYSTEM FÜR SCHLAUCHLEITUNGEN MIT EINER HEBELARMKUPPLUNG**
CONNECTION SYSTEM FOR HOSE LINES WITH A LEVER ARM COUPLING
SYSTÈME DE RACCORDEMENT POUR CONDUITS FLEXIBLES DOTÉ D'UN ACCOUPLEMENT À BRAS DE LEVIER

(30) Priorität: 05.10.2016 CH 13222016
(43) Veröffentlichungstag der Anmeldung: 11.04.2018
(73) Patentinhaber: Kissling, Rainer, 4415 Lausen (CH)
(72) Erfinder: Kissling, Rainer, 4415 Lausen (CH)
(74) Vertreter: Fleck, Hermann-Josef

(56) Entgegenhaltungen:
- EP-A2- 0 134 152
- WO-A1-97/29313
- GB-A- 2 264 986
- US-A- 3 860 274
- US-A- 4 519 635
- US-B1- 8 123 256

## Beschreibung

Die vorliegende Erfindung betrifft ein Verbindungssystem für Schlauchleitungen mit einer Hebelarmkupplung. Hebelarmkupplungen zur lösbaren Verbindung von Schlauchleitungen, in welchen Flüssigkeiten, Feststoffe und Gase befördert werden, sind im Stand der Technik bestens bekannt. Diese Hebelarmkupplungen bestehen aus einer Vaterkupplung und einer Mutterkupplung, welche mit einer ersten bzw. zweiten Schlauchleitung oder einem Endstopfen verbunden sind. Die Mutterkupplung weist ein Aufnahmegehäuse mit einem Aufnahmebereich auf, in den die Vaterkupplung hineinpasst. Zur Befestigung der Vaterkupplung am Aufnahmegehäuse ist die Mutterkupplung meistens mit zwei Hebelarmen versehen, welche auf gegenüberliegenden Seiten des Aufnahmegehäuses angeordnet sind und zwischen einer geschlossenen und einer offenen Position schwenkbar sind. In der geschlossenen Position greift ein Andruckabschnitt des Hebelarms durch eine radiale Öffnung im Aufnahmebereich des Aufnahmegehäuses ein. Die Vaterkupplung weist eine entsprechende Umfangsnut auf, in die der Andruckabschnitt der Hebelarme mit einer Andruckfläche klemmend eingreift. In der offenen Position greift der Andruckabschnitt des Hebelarms im Aufnahmegehäuse nicht ein, so dass die Vaterkupplung vom Aufnahmegehäuse frei ein- und ausgefahren werden kann. Durch diese Anordnung ergibt sich ein wirksamer Mechanismus zum schnellen und sicheren Koppeln und Entkoppeln von Schlauchleitungen, wie beispielsweise im Dokument DE 297 07 747 U1 beschrieben und in der europäischen Norm EN-14420-7 definiert.

Herkömmliche Hebelarmkupplungen weisen einen Exzenterhebel mit abgerundeten Andruckabschnitt auf, sodass die Andruckfläche durch Drehung des Hebelarms in den Aufnahmebereich hinein bzw. hinaus bewegt wird. Bei der Drehung der Hebelarme zur Kopplung der Schlauchleitungen greift die Andruckfläche des Hebelarms in die Umfangsnut der Vaterkupplung ein und treibt die Vaterkupplung ins Aufnahmegehäuse herein, bis sie an einen Dichtring anstoßt und in dichter Verbindung mit der Mutterkupplung steht. Umgekehrt wird der Andruckabschnitt des Hebelarms bei der Entkopplung aus dem Aufnahmebereich zurückgezogen und die Vaterkupplung rückwärts getrieben, bis diese komplett entkoppelt wird und aus der Mutterkupplung vollständig herausgezogen werden kann. Falls die Schlauchleitungen unter Druck stehen, besteht bei der Entkopplung allerdings die Gefahr, dass der Druck unkontrolliert plötzlich entweicht, sobald die Dichtung frei ist. Die Hebelarme und/oder die Schlauchleitungen können dann abrupt zurückschlagen und es können Schäden entstehen oder sogar Personen verletzt werden.
Zur Lösung dieses Problems wurde in der US 8,123,256 eine Hebelarmkupplung vorgestellt, deren Hebelarme nicht betätigt werden können, wenn die Schlauchleitung unter Druck steht. Dafür ist die Hebelarmkupplung mit einem Zylinder versehen, in welchem ein Kolben abhängig vom Druck in der Schlauchleitung bewegbar ist. Der Kolben ist mit einem Riegel verbunden, welcher einen Hebelarm verriegelt, wenn die Schlauchleitung unter Druck steht, und diesen freigibt, wenn die Schlauchleitung nicht unter Druck steht. In der US 4,519,635 wird eine Hebelarmkupplung mit einem zweistufigem Entkopplungsvorgang vorgestellt, damit die Vaterkupplung beim Entkoppeln unter Druck nicht sofort freigegeben und direkt aus der Mutterkupplung hinausgeschleudert wird. Dafür wurde die Andruckfläche des Hebelarms zusätzlich mit einem Nocken versehen. Wenn der Hebelarm zur Entkopplung der Kupplungsteile gedreht wird, werden die Kupplungsteile in einer ersten Stufe leicht auseinander und in einer zweiten Stufe wieder leicht aufeinander zu bewegt, bevor sie vollständig entkoppelt werden. In der zweiten Stufe des Entkopplungsvorgangs erfolgt also die Bewegung der Kupplungsteile gegen die Druckrichtung. Dies würde bei hohem Druck eine ungeheure Kraft in Anspruch nehmen, um den Hebelarm komplett zu öffnen, sodass die Hebelarmkupplung in dieser ersten Zwischenposition sozusagen blockiert ist. Zur Sicherheit ist also die Entkopplung der Schlauchleitungen unmöglich. Der Bediener, der die Hebelarmkupplung entkoppeln möchte, muss also den Druck in den Schlauchleitungen also zuerst senken bevor er die Kupplung komplett öffnen kann. Da die Kupplung in dieser geschlossenen Position immer noch Dicht ist, muss zuerst an einem anderen Punkt der Leitung der Druck abgelassen werden. In der WO 2009/156357 A1 wird eine weitere Hebelarmkupplung beschrieben, welche eine kontrollierte Druckentlastung während des Entkopplungsvorgangs bei mit Druck beaufschlagter Verbindung zwischen zwei Schlauchleitungen gewährleistet. Dafür ist neben jedem Hebelarm zusätzlich eine Sicherungsscheibe angeordnet, womit die Vaterkupplung in einer gesicherten Druckentlastungsposition relativ zur Mutterkupplung klemmend fixierbar ist. Zur Lösung wird bei dieser Vorrichtung eine Sicherungsscheibe mit einer komplexen Geometrie eingesetzt. Dadurch dass diese Sicherungsscheibe ein zusätzliches bewegliches Teil ist, welche am Aufnahmegehäuse der Mutterkupplung angeordnet ist und mit der Vaterkupplung und mit dem Hebelarm zusammenwirkt, wird sowohl die Herstellung als auch die Funktionsweise der Hebelarmkupplung wesentlich komplizierter.
Die vorliegende Erfindung stellt sich nunmehr die Aufgabe ein System der eingangs genannten Art derart zu verbessern, dass die Vorteile der bekannten Verbindungssysteme für Schlauchleitungen mit einer Hebelarmkupplung erhalten bleiben, das System aus einer Vaterkupplung, einer Mutterkupplung, zwei Hebelarmen und einem Dichtring besteht, die Hebelarme bei Vibrationen in der geschlossenen Position verbleiben, beim Öffnen unter Druck die Hebelarme in einer Zwischenposition blockieren und in dieser Zwischenposition der Überdruck aus dem Schlauchsystem über den Dichtring allmählich und kontrolliert entweichen kann.
Diese Aufgabe löst ein Verbindungssystem für Schlauchleitungen mit einer Hebelarmkupplung mit den Merkmalen des Patentanspruches 1.

In der Figur zeigt:
- Figur 1a: Querschnitt der Vaterkupplung
- Figur 1b: Querschnitt der Mutterkupplung
- Figur 1c: Seitenansicht eines nicht erfindungsgemäßen Hebelarms
- Figur 1d: Seitenansicht des Andruckabschnitts des Hebelarms
- Figur 1e: Querschnitt des Dichtrings
- Figur 2: Querschnitt einer nicht erfindungsgemäßen Hebelarmkupplung in der offenen Position
- Figur 3: Querschnitt der Hebelarmkupplung in der geschlossenen Position
- Figur 4: Querschnitt der Hebelarmkupplung in der Zwischenposition
- Figur 5: Querschnitt der Hebelarmkupplung in einer Position zwischen der Zwischenposition und der offenen Position
- Figur 6: Querschnitt der Hebelarmkupplung in der offenen Position

### Ersatzseite für die Seite 6 der Beschreibung

- Figur 7a: Detailansicht der Hebelarmkupplung in der Nähe eines Dichtrings mit quadratischen Profil, in der geschlossenen Position
- Figur 7b: Detailansicht der Hebelarmkupplung in der Nähe eines Dichtrings mit quadratischen Profil, in einer Position zwischen der geschlossenen Position und der Zwischenposition
- Figur 7c: Detailansicht der Hebelarmkupplung in der Nähe eines Dichtrings mit quadratischen Profil, in der Zwischenposition
- Figur 7d: Detailansicht der Hebelarmkupplung in der Nähe eines Dichtrings, in der geschlossenen Position
- Figur 7e: Detailansicht der Hebelarmkupplung in der Nähe eines Dichtrings, in einer Position zwischen der geschlossenen Position und der Zwischenposition
- Figur 7f: Detailansicht der Hebelarmkupplung in der Nähe eines Dichtrings, in der Zwischenposition
- Figur 8: Seitenansicht des erfindungsgemäßen Hebelarms
- Figur 9a: Verklebung der Hülle um den Kern des Dichtrings
- Figur 9b: Verklebung der Hülle um den Kern des Dichtrings mit dazwischenliegender Verbindungsschicht.

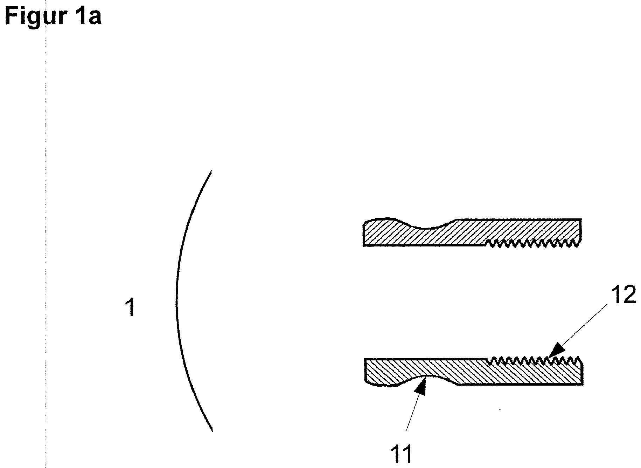

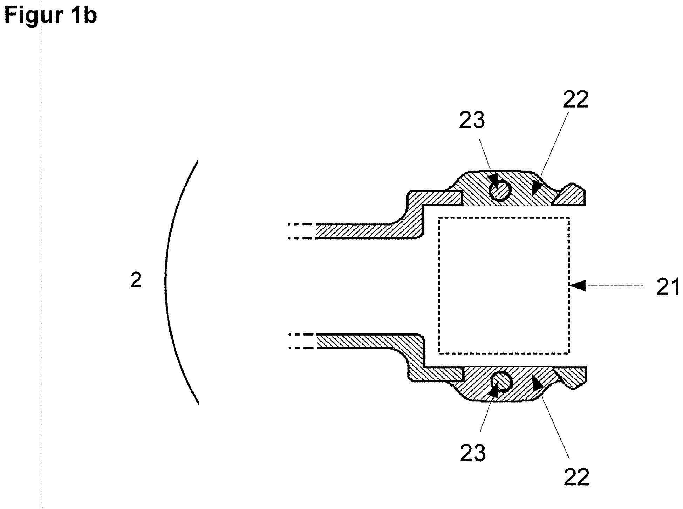

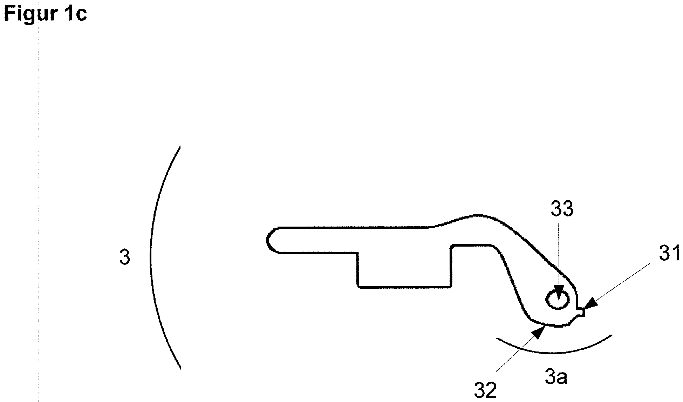

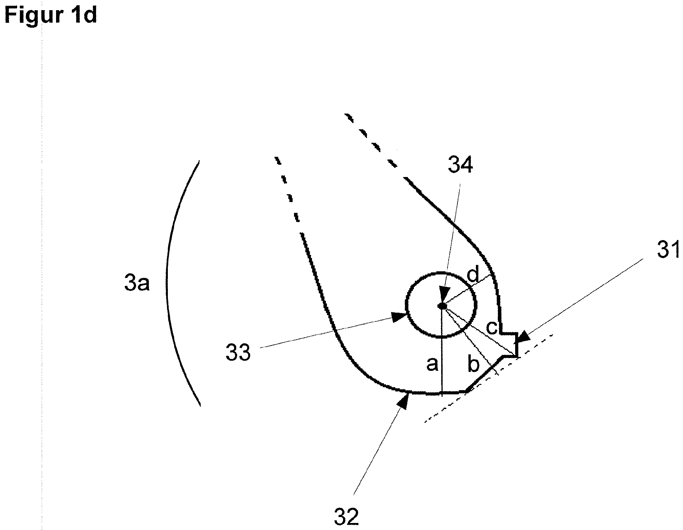

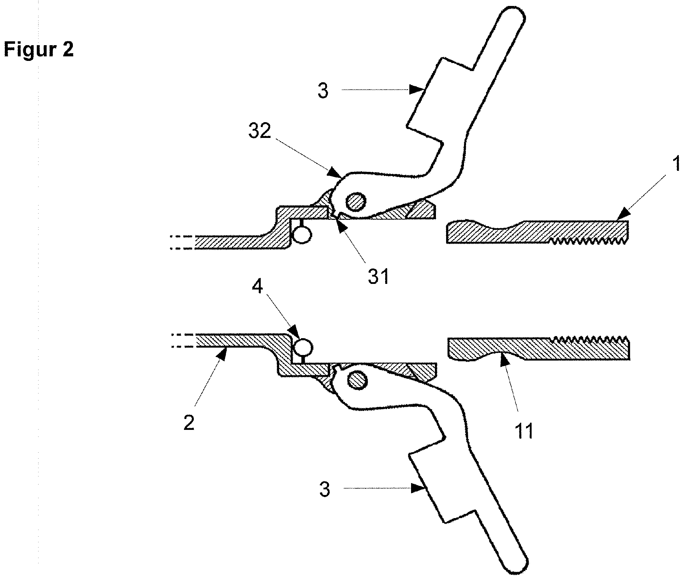

Eine Hebelarmkupplung besteht aus einer Vaterkupplung 1, einer Mutterkupplung 2, zwei Hebelarmen 3 und einem Dichtring 4 (Figuren 1a-e). Die Figur 2 zeigt, wie diese Elemente in der Hebelarmkupplung zusammengesetzt sind. Die Vaterkupplung 1 weist eine Umfangsnut 11 und ein Verbindungselement 12 zur Verbindung mit einer Schlauchleitung auf, beispielsweise ein Gewinde (Figur 1a). Die Mutterkupplung 2 bildet einen Aufnahmebereich 21, in den die Vaterkupplung 1 eingeführt werden kann (Figur 1b). Sie weist zudem zwei gegenüberliegende radiale Eingriffsöffnungen 22 auf, die mit einem Schwenkbolzen 23 versehen sind. Die Hebelarme 3 weisen einen abgerundeten Andruckabschnitt 3a auf, der einen Nocken 31 und eine Andruckfläche 32 umfasst (Figur 1c). Im Andruckabschnitt 3a befindet sich zudem eine Öffnung 33, die zur Befestigung der Hebelarme 3 an den Schwenkbolzen 23 der Mutterkupplung 2 dient. Die Hebelarme 3 sind also um eine Drehachse 34 schwenkbar angeordnet, welche durch die Mitte der Öffnung 33 und des Schwenkbolzens 23 durchgeht (Figur 1d). Die Öffnung 33 ist im Andruckabschnitt 3a exzentrisch angeordnet, damit die Dicke des Andruckabschnitts 3a um die Drehachse 34 herum nicht gleichmäßig ist. Im Folgenden werden vier bestimmte Dicken des Andruckabschnitts 3a in verschiedenen Richtungen um die Drehachse 34 herum definiert, die für die Erfindung von besonderem Interesse sind:
- Dicke a: zwischen der Drehachse 34 und der Andruckfläche 32;
- Dicke b: zwischen der Drehachse 34 und der Andruckfläche 32 in der Nähe des Nockens 31;
- Dicke c: zwischen der Drehachse 34 und dem äußersten Ende des Nockens 31;
- Dicke d: zwischen der Drehachse 34 und dem Rand des Andruckabschnitts 3a auf der anderen Seite des Nockens 31.

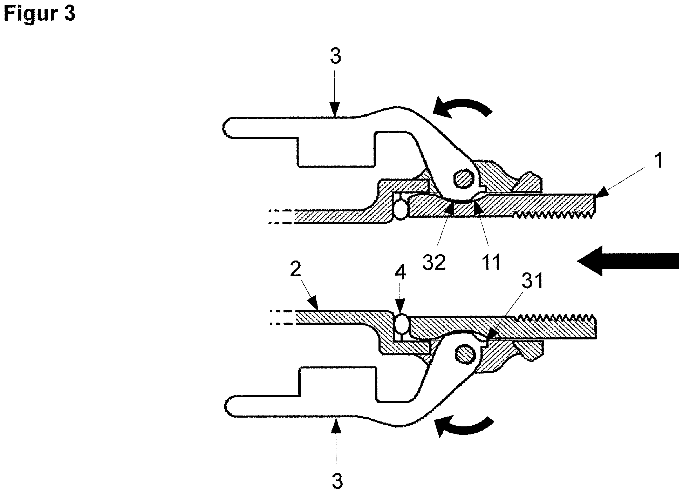

Wie in der Figur 1d ersichtlich, sind die relativen Größen dieser Dicken a, b, c und d wie folgt: a > c > b > d. Je nach Position des Hebelarms 3 um den Schwenkbolzen 23 greift also der Andruckabschnitt 3a durch die radiale Eingriffsöffnung 22 im Aufnahmebereich 21 der Mutterkupplung 2 mehr oder weniger tief ein (Figuren 3-5). In der offenen Position der Figur 2 weist der Andruckabschnitt 3a von der Drehachse 34 aus und in der Richtung des Aufnahmebereichs 21 eine Dicke d auf. Erfindungsgemäß ist diese Dicke d genügend klein, damit der Andruckabschnitt 3a im Aufnahmegehäuse 21 nicht eingreift, und die Vaterkupplung 1 in die Mutterkupplung 2 frei ein-und ausgeführt werden kann. Zur Kopplung der Schlauchleitungen wird die Vaterkupplung 1 in den Aufnahmebereich 21 der Mutterkupplung eingefahren und die Hebelarme 3 von der offenen Position zur geschlossenen Position geschwenkt (Figur 3). In der geschlossenen Position weist der Andruckabschnitt 3a von der Drehachse 34 aus und in der Richtung des Aufnahmebereichs 21 eine Dicke a auf. Dabei greift die Andruckfläche 32 in die entsprechende Umfangsnut 11 der Vaterkupplung klemmend ein, wodurch die Vaterkupplung im Aufnahmebereich 21 der Mutterkupplung fest und sicher verankert ist. Wichtig ist für die Dichtheit der Verbindung zwischen den Kupplungsteilen 1-2 , dass die Vaterkupplung 1 in der geschlossenen Position am Dichtring 4 nicht nur leicht anstoßt, sondern diesen gegen die Mutterkupplung 2 presst.

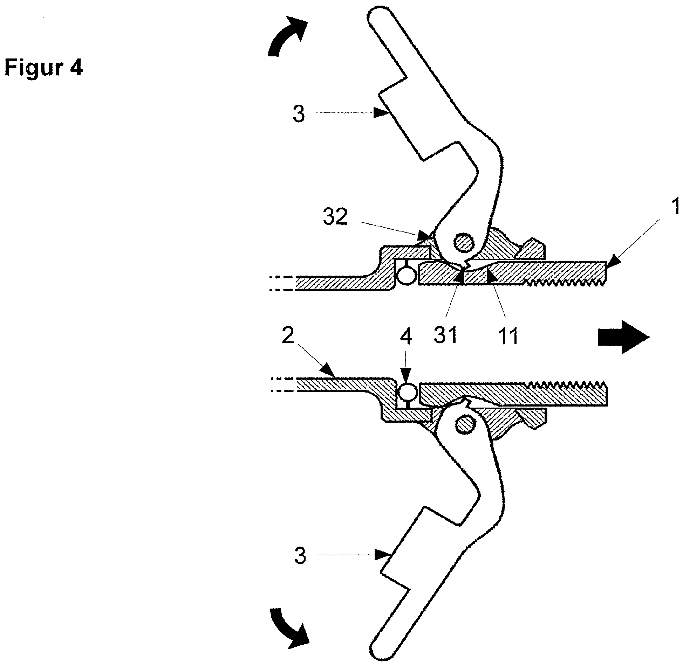

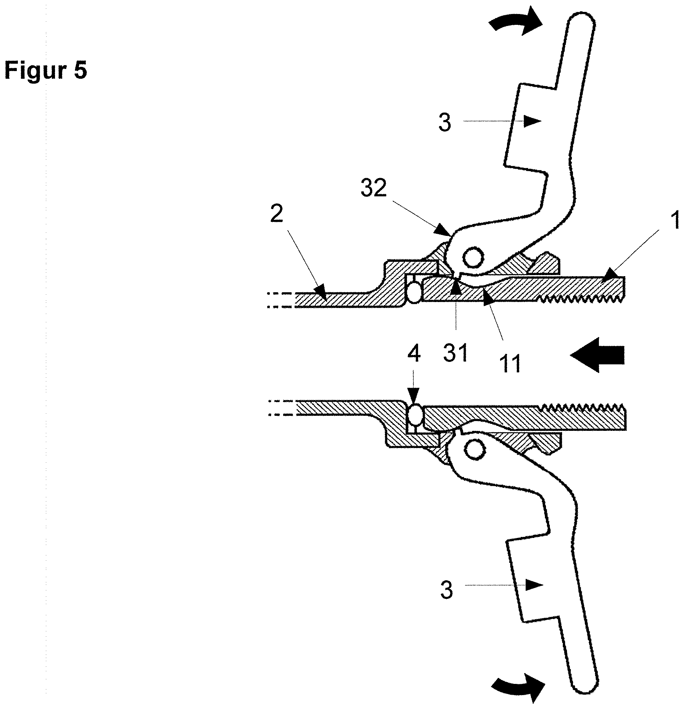

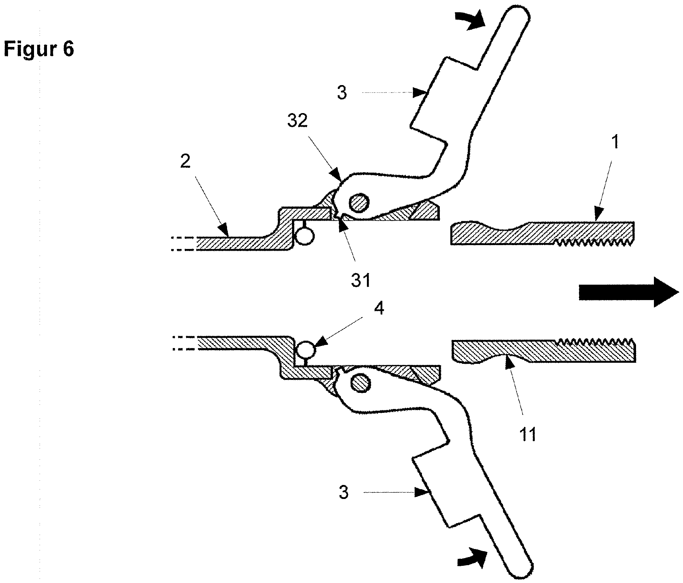

Es ist vorgesehen, dass die Entkopplung der Hebelarmkupplung gemäß einem zweistufigen Vorgang erfolgt. In der ersten Stufe des Entkopplungsvorgangs werden die Hebelarme 3 von der geschlossenen Position der Figur 3 zur Zwischenposition der Figur 4 geschwenkt. In der Zwischenposition weist der Andruckabschnitt 3a von der Drehachse 34 aus und in der Richtung des Aufnahmebereichs 21 eine Dicke b auf. Da die Dicke b kleiner als die Dicke a der geschlossenen Position ist, lockert sich der Griff um die Umfangsnut 11 der Vaterkupplung 1, so dass sich die Kupplungsteilen 1-2 leicht auseinander bewegen. Stehen die Schlauchleitungen unter Druck, erfolgt diese Auseinanderbewegung spontan, bis die Vaterkupplung 1 von dem vorstehenden Nocken 31 in der Zwischenposition der Figur 4 blockiert wird. Zur Vervollständigung der Entkopplung werden die Hebelarme 3 weiter von der Zwischenposition der Figur 4 zur Position der Figur 5 umgeschwenkt. In dieser Position weist der Andruckabschnitt 3a von der Drehachse 34 aus und in der Richtung des Aufnahmebereichs 21 eine Dicke c auf. Da der Abstand c grösser als der Abstand b der Zwischenposition ist, werden die Kupplungsteile 1-2 wieder leicht aufeinander zu geschoben (Figur 5), bevor sie in der anschließenden offenen Position komplett entkoppelt werden (Figur 6).

Zusammenfassend wird die Vaterkupplung beim Entkoppeln nicht direkt aus dem Aufnahmegehäuse gefahren, sondern:
- in einer ersten Stufe: von der geschlossenen Position zuerst leicht nach außen in die Zwischenposition bewegt;
- in einer zweiten Stufe: von der Zwischenposition dann wieder leicht nach innen bewegt;
- und schlussendlich in der offenen Position komplett entkoppelt, wobei sie aus der Mutterkupplung vollständig herausgezogen werden kann.

Falls die Schlauchleitungen unter Druck stehen, erfolgt die erste Stufe des Entkopplungsvorgangs mühelos, da der Druck die Kupplungsteile 1-2 auseinander treibt. In der zweiten Stufe des Entkopplungsvorgangs werden die Kupplungsteile 1-2 allerdings wieder aufeinander zu bewegt, d.h. entgegen der Druckrichtung. Ein Ausschlag der Hebelarme 3 und der Kupplungsteile 1-2 aus der Zwischenposition der Figur 4 ist somit ausgeschlossen, da jede Bewegung der Hebelarme 3 ein tieferes Eingreifen der Andruckfläche 32 oder des Nockens 31 im Aufnahmebereich 21 mit sich zieht und die Kupplungsteile 1-2 entgegen der Druckkraft bewegt werden. Wenn die Schlauchleitungen unter hohem Druck stehen, werden die Kupplungsteile 1-2 derart heftig auseinander gedrückt, dass ein Bediener sie auch mithilfe der Hebelarme 3 nur mit großer Kraft auseinander bringen kann. In der Zwischenposition ist die Hebelarmkupplung also blockiert.

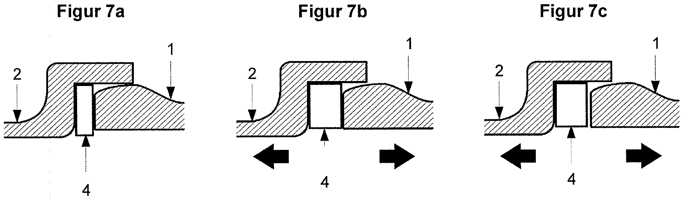

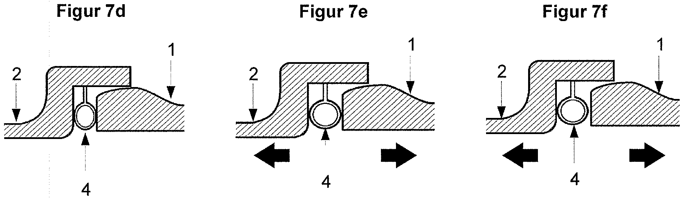

Demzufolge ist erfindungsgemäß vorgesehen, den Überdruck in der Zwischenposition über den Dichtring 4 aus dem Schlauchsystem entweichen zu lassen. Dafür wird die Verbindung zwischen Mutter- und Vaterkupplung undicht gemacht, d.h., dass ein Durchgang ermöglicht wird, welcher zulässt, dass der Überdruck zwischen dem Dichtring 4 und den Kupplungsteilen 1-2 entweichen kann. Bei herkömmlichen Hebelarmkupplungen werden Dichtringe 4 mit quadratischem oder rechteckigem Profil eingesetzt, welche in der geschlossenen Position mit den Kupplungsteilen 1-2 eine möglichst große Kontaktfläche aufweisen und somit eine gute Dichtung der Verbindung gewährleisten (Figur 7a). Wenn die Kupplungsteile 1-2 von der geschlossenen Position zur Zwischenposition auseinander bewegt werden, dehnt sich der komprimierte Dichtring 4 aus (Figur 7b). Der Dichtring 4 mit quadratischem oder rechteckigem Profil, dehnt sich seitlich gleichmäßig aus und die Kontaktfläche mit beiden Kupplungsteilen 1-2 bleibt gleich. Trotz der Bewegung der Kupplungsteile voneinander weg bleibt also die Verbindung dicht wie in der geschlossenen Position, bis der Dichtring 4 seine ursprüngliche Form wiederfindet, sich von den Kupplungsteilen 1-2 trennt und die Verbindung plötzlich komplett undicht wird (Figur 7c).

In der vorliegenden Erfindung soll in der Zwischenposition der Überdruck aus dem Schlauchsystem über den Dichtring allmählich und kontrolliert entweichen. Dies wird dadurch erreicht, dass der Dichtring 4 und die Vaterkupplung 1 nicht plötzlich getrennt werden. Vielmehr wird die Kontaktfläche zwischen dem Dichtring 4 und der Vaterkupplung 1 allmählich verkleinert, so dass die Dichtheit der Verbindung allmählich abnimmt und der Überdruck graduell entweichen kann.

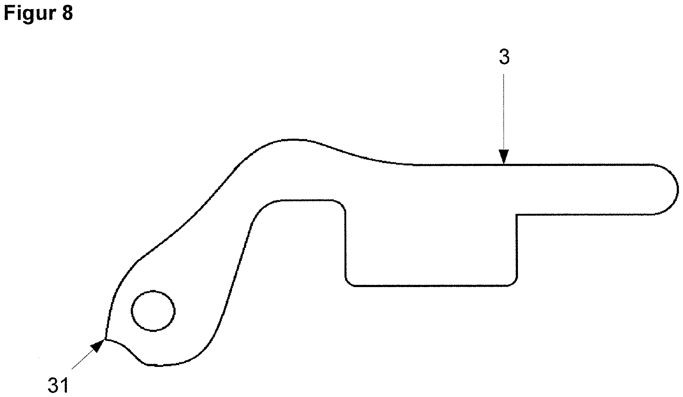

Es ist vorgesehen, einen Dichtring 4 mit rundem Profil in der Hebelarmkupplung einzusetzen (Figur 7d-f). Während der Bewegung der Kupplungsteile 1-2 von der geschlossenen Position (Figur 7d) zur Zwischenposition (Figur 7e) dehnt sich der komprimierte ovale Dichtring 4 seitlich so aus, dass die Kontaktfläche zu den beiden Kupplungsteilen reduziert wird, da der Dichtring 4 zu seiner ursprünglichen runden Form zurückkehrt. Die Dichtheit der Verbindung nimmt also graduell ab und der Überdruck aus der Schlauchleitung kann so langsam und kontrolliert abgebaut werden. Schläge und schnelle Bewegungen der Kupplungsteile und Hebelarme können also vermieden werden. Um eine genügende Dichtheit der Verbindung bei einem runden Dichtring 4 zu erreichen, sind vorzugsweise Dichtringe 4 mit größerem Durchmesser als der Standard-Dichtring mit Rechteckprofil zu verwenden, die dann auch stärker zwischen beiden Kupplungsteilen 1-2 komprimiert und verformt werden. Umgekehrt ist theoretisch auch möglich, das äußerste Ende der Vaterkupplung 1 abzurunden, statt einen Dichtring 4 mit rundem Profil einzusetzen um denselben Effekt zu erzielen. Eine Abänderung der Vaterkupplung 1 ist aber unerwünscht, da die Vaterkupplung ein normiertes Standard-Bauteil ist. Daher ist es erfindungsgemäß vorgesehen, die Gestaltung des bzw. der Hebelarme 3 der Mutterkupplung 2, welche die Vaterkupplung 1 direkt steuern, zu verbessern. Diese können mit relativ geringem Aufwand an einer bestehenden Standard Kupplung ausgewechselt werden. Die Hebelarm 3 wird derart angepasst, dass ein Nocken 31, wie dieser aus dem Stand der Technik bekannt ist, des Hebelarms 3 abgerundet wird, so dass der Nocken 31 eine geschwungene aber spitz zulaufende Form aufweist und nicht eckig aus dem Andruckabschnitt 3a des Hebelarms 3 hervorsteht (Figur 8). Unter dem Ausdruck "Hebelarm 3 mit geschwungenen Nocken 31" ist ein Hebelarm 3 zu verstehen, wobei die Andruckfläche 3a des Hebelarms 3 zwischen der geschlossenen Position und der Zwischenposition immer tangential im Kontakt mit der Vaterkupplung steht. Herkömmliche eckige Nocken 31 bewirken, dass die Kupplungsteile 1-2 abrupt und mit großer Kraft voneinander weg geschleudert werden. Das anschließende Stoppen dieses Ausschlags in der blockierten Zwischenposition kann in der Leitung einen Rückschlageffekt auslösen, der die Hebelarmkupplung, die Schlauchleitungen und allfällige Ventile beschädigen könnte. Zudem erfolgt die Auseinanderbewegung von der geschlossenen Position mit kompletter Dichtheit zur Zwischenposition mit kompletter Trennung zwischen dem Dichtring und den Kupplungsteilen 1-2 auf einmal, so dass der Überdruck plötzlich entweicht. Mit einem geschwungenen Nocken 31 wird die Vaterkupplung allmählich aus der Mutterkupplung herausgefahren, bevor sie an der Spitze des Nockens 31 vollständig blockiert wird. Somit nimmt die Kontaktfläche zwischen dem Dichtring 4 und der Vaterkupplung 1 nur allmählich ab, was eine langsame und kontrollierte Druckentlassung gewährleistet. Da bereits vor dem Erreichen der blockierten Position und auch in dieser Position der Dichtring 4 nicht komplett abdichtet, kann der Überdruck in der Leitung abgebaut werden, bis dann ohne übertriebenen Kraftaufwand der Hebelarm über den spitz zulaufenden Teil bewegt werden kann, so dass die Kupplung komplett geöffnet ist.

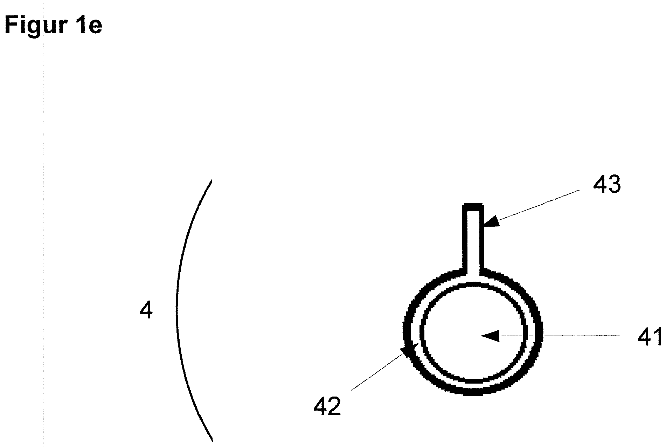

In einer Variante der Hebelarmkupplung umfasst der Dichtring 4 einen Kern 41 aus elastischem Material (Figur 1e) wie Gummi oder Kautschuk, beispielsweise aus Viton®. Das elastische Kernmaterial 41 dient dazu, dass der Dichtrings 4 stark komprimiert werden kann, damit er in der geschlossenen Position zwischen den Kupplungsteilen 1-2 stark verformt wird und die Verbindungsfläche zu den Kupplungsteilen möglichst groß wird, so dass eine dichte Verbindung entsteht. Elastische Materialien wie Kautschuk weisen allerdings meistens einen hohen Reibungskoeffizient auf und haften daher an den Kupplungsteilen 1-2. Es besteht also weiterhin die Gefahr, dass derartige Dichtringe 4 während der Bewegung der Kupplungsteile 1-2 voneinander weg, an der Vaterkupplung 1 haften bleiben und sich nur plötzlich und stoßweise lösen, was wiederum zu Schlägen führen kann. Ebenfalls ist möglich, dass sich ein Dichtring 4 mit Rundprofil verdrehen kann, so dass die Elastizität unregelmäßig wird, oder der Ring sogar aus der gewünschten Position weg bewegt wird. Um den Überdruck kontrolliert entweichen zu lassen ist also sinnvoll, wenn die Haftung des Dichtrings reduziert ist. Eine besonders vorteilhafte Ausführungsvariante sieht also vor, dass der Kern 41 des Dichtrings 4 mit einer Hülle 42 aus einem zweiten Material umgeben ist, das weniger haftend ist und einen niedrigen Reibungskoeffizient aufweist. Beispielsweise ist porenfreies PTFE (Teflon) eine gute Materialwahl, weil PTFE diese Kriterien erfüllt und zusätzlich eine hervorragende chemische Reaktionsträgheit aufweist. Das hat den zusätzlichen Vorteil, dass der Dichtring auch bei stark reaktiven Medien, welche durch die Schlauchleitungen befördert werden, sich nicht oder nur wenig abnützt und eine große Langlebigkeit aufweist.

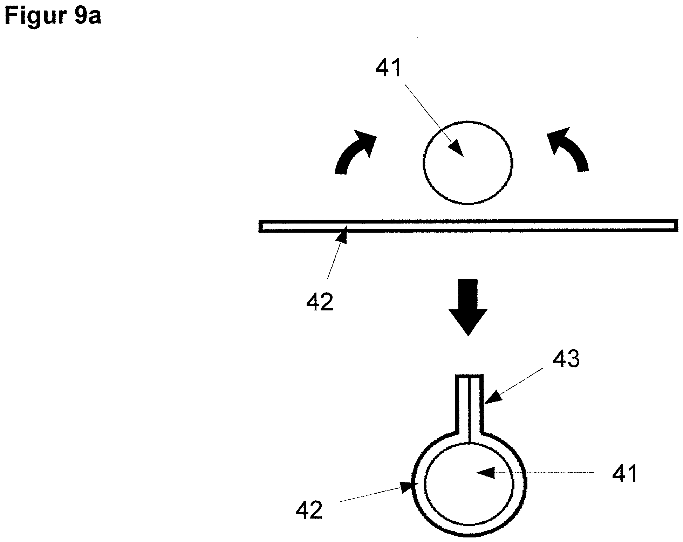

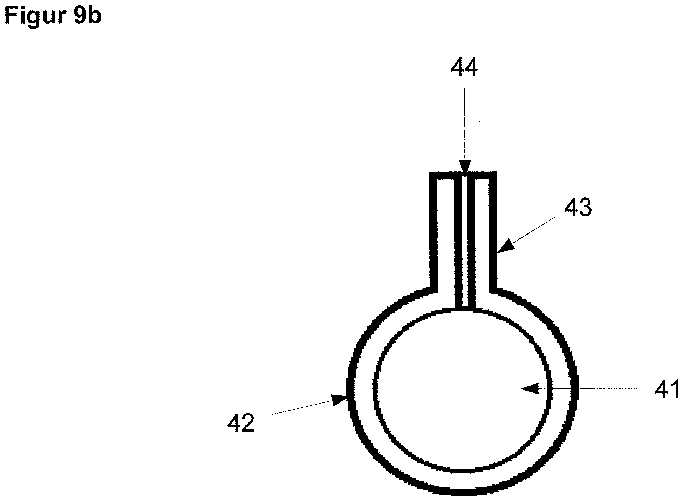

In einem möglichen Herstellungsverfahren wird die Hülle 42 um den Dichtring 4 herum gewickelt und verklebt (Figur 9a). Auf einer Seite des Dichtrings 4 werden beide Enden der Hülle 42 nahtlos zusammengeklebt oder zusammengeschweißt. Aufgrund der bekannten Antihaftwirkung von PTFE ist es jedoch schwierig, zwei PTFE Teile genügend fest zu verkleben oder zu verschweißen. Aufgrund des hohen Drucks und der wiederholten Verformungen des Dichtrings 4 ist die Gefahr, dass die Verbindung zwischen den beiden Enden der Hülle 42 sich allmählich auflöst oder sogar plötzlich aufplatzt recht groß. Um dies zu vermeiden muss die Verbindung sehr stark sein. Beim Verkleben oder Verschweißen muss also dafür gesorgt werden, dass die Haftung genügend stark ist. Diese Haftung kann verbessert werden, indem die zu verklebenden Flächen vorgängig bearbeitet werden. Sie könnten z.B. aufgeraut, mit Rillen versehen oder chemisch bearbeitet werden. Zusätzlich kann ein spezieller Klebstoffs oder eine Zwischenschicht verwendet werden, welcher die Verbindung stärkt. In einer Ausführungsvariante ist vorgesehen, dass die Verbindung zwischen den beiden Enden der Hülle 42 mit einer dazwischenliegenden Verbindungsschicht 44 verstärkt ist (Figur 9b). Diese Verbindungsschicht 44 kann beispielsweise aus Perfluoroalkoxy Alkan (PFA) bestehen.

Da der Dichtring aus einem wenig haftenden Material besteht und aufgrund des runden Profils nicht genau in die Aussparung in der Mutterkupplung hineinpasst, kann dieser unter Umständen verrutschen oder nicht über den gesamten Umfang im selben Abstand zur äußeren Umrandung liegen, was auf die Dichtung einen negativen Einfluss haben kann. Daher ist in einer weiteren Ausführungsvariante vorgesehen, dass der Dichtring einen radialen Abstandhalter 43 aufweist, damit er im richtigen und vor allem auch gleichmäßigen Abstand von den Seitenwänden der Mutterkupplung zentriert festgehalten wird (Figuren 2-6). Dieser Abstandhalter 43 kann beispielsweise ein vorstehender Teil der Hülle 42 sein (Figuren 9a-b). Bevorzugterweise kann der verklebte Teil der Hülle 42 gleichzeitig den Abstandhalter 43 bilden.

## Patentansprüche

1. Verbindungssystem für Schlauchleitungen mit einer Hebelarmkupplung, bestehend aus einer Vaterkupplung (1), einer Mutterkupplung (2), zwei Hebelarmen (3) und einem Dichtring (4), wobei die Mutterkupplung (2) einen Aufnahmebereich (21) aufweist, die Vaterkupplung (1) in diesen Aufnahmebereich (21) eingeführt werden kann, der Dichtring (4) in den Aufnahmebereich (21) der Mutterkupplung (2) eingelegt ist, die Hebelarme (3) an der Mutterkupplung (2) um eine Drehachse (34) schwenkbar angeordnet sind, einen Andruckabschnitt (3a) zur Vaterkupplung (1) mit einem Nocken (31) aufweisen und eine offene Position, eine geschlossene Position, sowie eine Zwischenposition einnehmen können, der Andruckabschnitt (3a) von der Drehachse (34) aus und in der Richtung des Aufnahmebereichs (21) in der offenen Position eine Dicke d aufweist, in der geschlossenen Position eine Dicke a und in der Zwischenposition, in der Nähe des Nockens(31), eine Dicke b, und zwischen der Drehachse (34) und dem äussersten Ende des Nockens (31) eine Dicke c, mit a > c > b > d so dass beim Entkoppeln mit Schwenken der Hebelarme (3) von der geschlossenen Position zur Zwischenposition die Vater- und Mutterkupplung (1, 2) von einander weg bewegt werden, und mit Schwenken der Hebelarme (3) von der Zwischenposition zur offenen Position die Vater- und Mutterkupplung (1, 2) aufeinander zu bewegt werden, bevor sie vollständig entkoppelt werden, wobei die Dicke d genügend klein ist, damit der Andruckabschnitt (3a) im Aufnahmegehäuse (21) nicht eingreift, und die Vaterkupplung (1) in die Mutterkupplung (2) frei ein-und ausgeführt werden kann, wobei der Nocken (31) des Hebelarms (3) abgerundet ist, so dass der Nocken (31) eine geschwungene aber spitz zulaufende Form aufweist und nicht eckig aus dem Andruckabschnitt (3a) des Hebelarms (3) hervorsteht, so dass der Andruckabschnitt (3a) des Hebelarms (3) zwischen der geschlossenen Position und der Zwischenposition immer tangential im Kontakt mit der Vaterkupplung (1) steht, und wobei der Anpressdruck zwischen der Mutterkupplung (2) bzw. der Vaterkupplung (1) und dem Dichtring (4) so reduziert wird, dass ein Durchgang ermöglicht wird, damit der Dichtring (4) in der Zwischenposition nicht komplett abdichtet, und der Druck aus dem Schlauch entweichen kann.

## Claims

1. Connection system for hose lines with a lever arm coupling, consisting of a male coupling (1), a female coupling (2), two lever arms (3) and a sealing ring (4), wherein the female coupling (2) has a receiving region (21), the male coupling (1) can be inserted into this receiving region (21), the sealing ring (4) is inserted in the receiving region (21) of the female coupling (2), the lever arms (3) are arranged on the female coupling (2) so as to be pivotable about an axis of rotation (34), have a pressing section (3a) for the male coupling (1) with a cam (31) and can take an open position, a closed position and an intermediate position, the pressing section (3a) has, from the axis of rotation (34) and in the direction of the receiving region (21), a thickness d in the open position, a thickness a in the closed position and a thickness b in the intermediate position near the cam (31), and between the axis of rotation (34) and the extremity of the cam (31) a thickness c, with a > c > b > d, so that upon decoupling by pivoting the lever arms (3) from the closed position to the intermediate position the male and female couplings (1, 2) are moved away from each other, and by pivoting the lever arms (3) from the intermediate position to the open position, the male and female couplings (1, 2) are moved towards one another before they are completely decoupled, wherein the thickness d is sufficiently small so that the pressing section (3a) does not engage in the receiving region (21), and the male coupling (1) can be freely inserted in and removed from the female coupling (2), wherein the cam (31) of the lever arm (3) is rounded, so that the cam (31) has a curved but tapering shape and does not protrude squarely from the pressing section (3a) of the lever arm (3), so that the pressing section (3a) the lever arm (3) is always tangentially in contact with the male coupling (1) between the closed position and the intermediate position, and wherein the contact pressure between the female coupling (2) or the male coupling (1) and the sealing ring (4) is reduced to allow a passage, so that the sealing ring (4) does not seal completely in the intermediate position, and the pressure can escape from the hose.

## Revendications

1. Système de raccordement pour conduites flexibles doté d'un accouplement à bras de levier, composé d'un raccord mâle (1), d'un raccord femelle (2), de deux bras de levier (3) et d'une bague d'étanchéité (4), dans le quel le raccord femelle (2) a une zone de réception (21), le raccord mâle (1) peut être inséré dans cette zone de réception (21), la bague d'étanchéité (4) est insérée dans la zone de réception (21) du raccord femelle (2), les bras de levier (3) sont disposés sur le raccord femelle (2) de manière pivotante autour d'un axe de rotation (34), ont une section de pression (3a) pour le raccord mâle (1) avec une came (31) et peuvent prendre une position ouverte, une position fermée et une position intermédiaire, la section de pression (3a) a, de l'axe de rotation (34) et en direction de la zone de réception (21), une épaisseur d en position ouverte, une épaisseur a en position fermée et une épaisseur b en position intermédiaire à proximité de la came (31), et entre l'axe de rotation (34) et l'extrémité de la came (31) une épaisseur c, avec a > c > b > d, de sorte que lors du découplage par pivotement des bras de levier (3) de la position fermée à la position intermédiaire, les raccords mâle et femelle (1, 2) sont éloignés l'un de l'autre, et par pivotement des bras de levier (3) de la position intermédiaire vers la position ouverte les raccords mâle et femelle (1, 2) sont rapprochés avant d'être complètement découplés, l'épaisseur d étant suffisamment petite pour que la section de pression (3a) ne s'engage pas dans la zone de réception (21) et que le raccord mâle (1) puisse être librement inséré dans et extrait du raccord femelle (2), la came (31) du bras de levier (3) est arrondie, de sorte que la came (31) a une forme courbe mais en pointe et ne dépasse pas de manière anguleuse de la section de pression (3a) du bras de levier (3), de sorte que la section de pression (3a) du bras de levier (3) est toujours tangentiellement en contact avec le raccord mâle (1) entre la position fermée et la position intermédiaire, et dans lequel la pression de contact entre le raccord femelle (2) ou le raccord mâle (1) et la bague d'étanchéité (4) est réduite de manière à rendre possible un passage afin que la bague d'étanchéité (4) ne soit pas complètement étanche en position intermédiaire et que la pression puisse s'échapper du tuyau.
